# EUROPÄISCHE PATENTANMELDUNG

(11) **EP 0 709 417 A1**
(43) Veröffentlichungstag der Anmeldung: **01.05.1996**
(21) Anmeldenummer: 95116475.5
(22) Anmeldetag: 19.10.1995
(51) Int. Cl.: C08G 18/69, C08G 18/65, C08J 3/03, C09D 167/08, C09D 5/02

(54) **Reaktive Emulgatoren auf Basis ungesättigter Polyurethane**

(30) Priorität: 27.10.1994 DE 4438430
(71) Anmelder: HOECHST AKTIENGESELLSCHAFT, D-65926 Frankfurt am Main (DE)
(72) Erfinder: Zöller, Joachim, Dr., D-55128 Mainz (DE); Thiergärtner, Katja, D-90471 Nürnberg (DE)

(57) **Zusammenfassung**

Polyurethane mit olefinischen Doppelbindungen und einem Massengehalt an über Polyäthylenglykol eingebauten Äthylenoxideinheiten von 20 bis 80 %, erhältlich durch Umsetzung von
a) mindestens einem organischen Polyisocyanat, mit
b) mindestens einem gegenüber Isocyanaten reaktiven Polybutadienderivat
c) und gegebenenfalls einem oder mehreren Diolen, die zusätzlich mindestens eine weitere Hydroxylgruppe oder Carboxylgruppe enthalten, und
d) einer Polyoxyalkylenglykol-Komponente mit einer Molmasse von 500 bis 10000 g/mol
unter Einhaltung eines NCO/OH-Äquivalentverhältnisses, bezogen auf alle Ausgangskomponenten a) bis d), von 0,5:1 bis 1,2:1.

## Beschreibung

Die Erfindung betrifft neue, hydrophil modifizierte, olefinisch ungesättigte Polyurethane und ihre Verwendung als reaktive Emulgatoren für radikalisch und/oder oxidativ härtbare Kunstharze bei der Herstellung von wäßrigen Kunstharzdispersionen. Die Erfindung betrifft weiter ein in Wasser dispergierbares Gemisch von ungesättigten Gruppen aufweisenden Kunstharzen, welches als Emulgator-Komponente derartige hydrophile Polyurethane enthält, und Beschichtungsmittel, deren Bindemittel im wesentlichen aus einem derartigen Gemisch bestehen.

Eine Möglichkeit, zu wasserverdünnbaren Kunstharzdispersionen zu gelangen, besteht im Einsatz von externen Emulgatoren. So werden beispielsweise gemäß US-PS 4,070,323 Acryloylgruppen tragende Polyurethane mit Hilfe von anionischen oder kationischen Öl-in-Wasser-Emulgatoren (z.B. Natriumlaurylsulfat) in Wasser dispergiert. Diese Emulgatoren werden bei der radikalischen Vernetzung nicht in den Lackfilm eingebaut. Infolgedessen wird der Grad der erreichbaren Wasserfestigkeit der Lackfilme nicht unwesentlich herabgesetzt.

Die DE-A 39 00 257 beschreibt nichtionisch hydrophile (Meth)Acryloylgruppen aufweisende Polyurethane und deren Verwendung als reaktive Emulgatoren für in Wasser nicht dispergierbare Urethan(meth)acrylate. Mit diesen Emulgatoren sind jedoch nur eine begrenzte Anzahl von Kunstharzen emulgierbar; so sind sie z.B. nicht in der Lage, styrolfreie, ungesättigte Polyesterharze zu emulgieren. Die DE-A 40 04 651 beschreibt lufttrocknende Polyurethanharze, die sowohl Polyole wie auch Monoalkohole enthalten, die ungesättigte Gruppen enthalten, in die bis zu 40% konventionelle Alkydharze einemulgiert werden können. Die EP-A 0 501 247 beschreibt olefinisch ungesättigte Polyurethane und deren Verwendung als reaktive Emulgatoren, die eine β,γ-äthylenisch ungesättigte Ätheralkohol-Komponente enthält, die hauptsächlich als Emulgatoren für ungesättigte Polyesterharze eingesetzt werden.

Allen vorangegangenen Beispielen gemeinsam ist, daß die Anzahl der Doppelbindungen in den ungesättigten Polyurethanen vergleichsweise gering ist, und damit auch deren Reaktionsmöglichkeiten mit dem zu emulgierenden Kunstharz.

Eine Möglichkeit, viele Doppelbindungen in Emulgatoren einzuführen, ist in DE-A 27 54 140 beschrieben. Da die hydrophile Komponente (ausschließlich Polyäthylenglykol) über eine Esterbindung an die hydrophobe Komponente (Polybutadien) geknüpft ist, ist der Emulgator an der Phasengrenzfläche instabil gegenüber Hydrolyse. Daher sind die Kunstharzemulsionen nicht ausreichend lagerstabil.

Es bestand daher die Aufgabe, Emulgatoren zu entwickeln, um eine Vielfalt von Bindemitteln in die wäßrige Phase zu überführen. Diese Emulgatoren sollen hydrolysestabil sind und möglichst viele reaktive Gruppen tragen, die mit dem Bindemittel reagieren können. Desweiteren sollten die Filmeigenschaften in Bezug auf Glanz, Wasserfestigkeit usw. nicht negativ beeinflußt werden.

Diese Aufgabe konnte mit der Bereitstellung der nachstehend näher beschriebenen erfindungsgemäßen hydrophilen Polyurethane bzw. mit deren, nachstehend ebenfalls näher beschriebenen, erfindungsgemäßen Verwendung gelöst werden.

Gegenstand der Erfindung sind daher Polyurethane mit einem Massengehalt an über Polyäthylenglykol eingebauten Äthylenoxideinheiten von 20 bis 80 %, die durch Umsetzung von
a) mindestens einem organischen Polyisocyanat, mit
b) mindestens einem gegenüber Isocyanaten reaktivem Polybutadienderivat
c) und gegebenenfalls einem oder mehreren Diolen, die zusätzlich mindestens eine weitere Hydroxylgruppe oder Carboxylgruppe enthalten, und
d) einer Polyoxyalkylenglykol-Komponente mit einer Molmasse von 500 bis 10000 g/mol
unter Einhaltung eines NCO/OH-Äquivalentverhältnisses, bezogen auf alle Ausgangskomponenten a) bis d), von 0,5:1 bis 1,2:1, vorzugsweise von 0,7:1 bis 1,1:1, hergestellt worden sind.

Gegenstand der Erfindung ist auch die Verwendung dieser erfindungsgemäßen Polyurethane als reaktive Emulgatoren für in Wasser nicht dispergierbare, radikalisch und/oder oxidativ härtbare Kunstharze bei der Herstellung von wäßrigen Kunstharzdispersionen.

Gegenstand der Erfindung ist auch ein in Wasser dispergierbares Gemisch von radikalisch und/oder oxidativ härtbaren, ungesättigte Gruppen enthaltenden Kunstharzen, enthaltend
A) 50 bis 95 Gew.-Teile mindestens eines, in Wasser nicht dispergierbaren, ungesättigte Gruppen enthaltenden Kunstharzes der zahlenmittleren Molmasse Mn 500 bis 10.000 g/mol und
B) 5 bis 50 Gew.-Teile eines als Dispergiermittel in Wasser wirkenden Polyurethans, dadurch gekennzeichnet, daß als Komponente B) mindestens ein Polyurethan der vorstehend genannten, erfindungsgemäßen Art verwendet wird.

Gegenstand der Erfindung ist schließlich auch ein Beschichtungsmittel enthaltend ein wäßriges, radikalisch und/oder oxidativ härtbares Bindemittel, sowie gegebenenfalls in der Lacktechnologie übliche Hilfs- und Zusatzmittel, dadurch gekennzeichnet, daß das Bindemittel im wesentlichen aus einem Gemisch der vorstehend genannten Art besteht.

Bei den erfindungsgemäßen Polyurethanen handelt es sich um Umsetzungsprodukte der bereits obengenannten Ausgangskomponenten a) bis d), wobei bei der Herstellung der Polyurethane vorzugsweise pro Mol der Komponente a) 0,3 bis 1 Mol der Komponente b), 0 bis 0,5 Mol der Komponente c) und 0,3 bis 1 Mol der Komponente d) zum Einsatz gelangen. Besonders bevorzugt sind Verhältnisse von 0,35 bis 0,95 Mol b), 0,05 bis 0,45 Mol c) und 0,35 bis 0,95 Mol d) pro 1 Mol von a).

Die Komponente a) besteht aus mindestens einem organischen Polyisocyanat. Geeignete Polyisocyanate sind beliebige, aus der Polyurethanchemie an sich bekannte organische Polyisocyanate mit aliphatisch, cycloaliphatisch und/oder aromatisch gebundenen Isocyanatgruppen, die vorzugsweise eine Molmasse von 168 bis 1.000, vorzugsweise 168 bis 300 g/mol aufweisen. Geeignet sind beispielsweise 1,6-Diisocyanatohexan (HDI), 1-Isocyanato-3,3,5-trimethyl-5-isocyanatomethyl-cyclohexan (IPDI), Tetramethylxylylendiisocyanat (TMXDI), 4,4'-Diisocyanatodicyclohexylmethan, 4,4'-Diisocyanatodiphenylmethan, dessen technischen Gemische mit 2,4'-Diisocyanatodiphenylmethan und gegebenenfalls den höheren Homologen dieser Diisocyanate, 2,4-Diisocyanatotoluol und dessen technische Gemische mit 2,6-Diisocyanatotoluol. Diisocyanate der beispielhaft genannten Art sind als Komponente a) bevorzugt, jedoch sind auch höherfunktionelle Polyisocyanate wie beispielsweise Biuret-, Isocyanurat- oder Urethan-modifizierte Polyisocyanate auf Basis der beispielhaft genannten einfachen Diisocyanate grundsätzlich geeignet. Diese Derivate haben im allgemeinen eine Molmasse bis zu 1.000 g/mol. Die Herstellung derartiger Derivate ist beispielsweise in US-PS 3,124 605, US-PS 3,183,112, US-PS 3,919,218 oder US-PS 4,324,879 beschrieben.

Bei dem gegenüber Isocyanaten reaktiven Polybutadienderivat b) handelt es sich um einfach oder mehrfach funktionalisierte Polybutadiene wie z.B. Monohydroxypolybutadien, Dihydroxypolybutadien und Polyhydroxypolybutadien, carboxylfunktionelle Polybutadiene oder durch Veresterung bzw. Amidierung von Carboxybutadienen mit Diolen oder Diaminen erhaltene OH- bzw. Amino-funktionelle Polybutadiene.

Als höherfunktionelle Komponente c), die bevorzugt 3 bis 6 Hydroxyl- und/oder Carboxylgruppen enthält, werden Trimethylolpropan, Trimethyloläthan, Glycerin, Ditrimethylolpropan, Pentaerythrit und Dipentaerythrit, sowie Bishydroxyalkancarbonsäuren wie z.B. Dimethylolpropionsäure oder Weinsäure bevorzugt, wobei auch Mischungen zweier oder mehrerer dieser Verbindungen möglich sind.

Bei der Komponente d) handelt es sich um lineare Polyoxyalkylenglykole mit einer zahlenmittleren Molmasse von 750 bis 20.000, vorzugsweise 1.000 bis 10.000 g/mol. Der molare Gehalt an Oxyäthyleneinheiten in diesen Polyoxyalkylenglykolen ist mindestens 80 %, vorzugsweise bis zu 100 %.

"Gemischte" Polyoxyalkylenglykole entstehen beispielsweise durch Verwendung von Gemischen verschiedener Alkylenoxide, beispielsweise von Äthylenoxid und Propylenoxid im Molverhältnis von ca. 8:2, bei der Herstellung der Polyoxyalkylenglykole durch Alkoxylierung geeigneter zweiwertiger Startermoleküle wie beispielsweise Wasser, Äthylenglykol oder Propylenglykol. Vorzugsweise besteht die Komponente d) jedoch aus reinen Polyoxyäthylenglykolen. Ebenso geeignet zur Synthese der Emulgatoren sind Polyäthylenglykolmonomethyläther. Bevorzugt sind gemischte Poly(oxyäthylen)/(oxypropylen)-Glykole mit einem Massenanteil von über 50 % an Oxyäthyleneinheiten.

Die Herstellung der erfindungsgemäßen, als Emulgatoren zu verwendenden, hydrophilen Polyurethane durch Umsetzung der genannten Ausgangskomponenten kann in Substanz oder in gegenüber Isocyanatgruppen inerten Lösungsmitteln wie beispielsweise Aceton, Methyläthylketon, N-Methylpyrrolidon, Äthylacetat, Butylacetat, Toluol, Kohlenwasserstoffen oder Gemische derartiger Lösungsmittel erfolgen, wobei vorzugsweise Reaktionstemperaturen von 20 bis 200 °C, insbesondere von 50 bis 150 °C, eingehalten werden.

Dabei können die Komponenten b) bis d) gleichzeitig oder schrittweise mit der Komponente a) zur Reaktion gebracht werden.

In der Praxis kann somit beispielsweise so vorgegangen werden, daß die Komponenten b) bis d) vorgelegt und innerhalb der obengenannten Temperaturbereiche mit dem Isocyanat a) umgesetzt wird, bis der NCO-Massengehalt auf unter 0,1 % abgefallen ist. Man kann auch die Komponente a) vorlegen, zunächst die Komponente b) zutropfen und dann die Mischung der Komponente c) und d) zugeben oder zunächst die Mischung c) und d) zutropfen und dann die Komponente b) zutropfen.

Grundsätzlich werden hierbei Art und Mengenverhältnisse der Ausgangskomponenten innerhalb der genannten Bereiche so gewählt, daß, bezogen auf die Komponenten a) bis d), ein NCO/OH-Äquivalentverhältnis von 0,5:1 bis 1,2:1 gewährleistet ist.

Die Urethanbildungsreaktionen können in an sich bekannter Weise z.B. mit Zinnoctoat, Dibutylzinndilaurat oder tertiären Aminen katalysiert werden. Ebenso kann das Polyurethan durch Zugabe geeigneter Inhibitoren und Antioxydantien von je 0,001 bis 0,3 %, bezogen auf Gesamtmasse der Mischung, vor vorzeitiger und unerwünschter Polymerisation oder Oxidation geschützt werden.

Die auf diese Weise erhaltenen hydrophilen Polyurethane mit ungesättigten Gruppen weisen eine zahlenmittlere Molmasse von 2 bis 30, vorzugsweise 3 bis 20 kg/mol (Gelpermeationschromatographie, Polystyrol-Standard) und einen Massengehalt an über Polyäthylenglykol eingebauten Äthylenoxideinheiten -CH₂-CH₂-O- von 20 bis 80 %, vorzugsweise 30 bis 70 %, auf.

Die hydrophilen Polyurethane sind wertvolle Emulgatoren für hydrophobe, in Wasser nicht dispergierbare Kunstharze. Diese Kunstharze haben üblicherweise eine zahlenmittlere Molmasse von 0,5 bis 20, vorzugsweise 0,5 bis 10 kg/mol (Gelpermeationschromatographie, Polystyrol-Standard).

Diese Kunstharze sind vorzugsweise kommerziell erhältliche Harze aus der Gruppe der Alkydharze, UV-Bindemittel, Polyesterharze, Polyacrylate, Polybutadienöle, Polyepoxide. Gegebenenfalls können sie nachträglich geringfügig modifiziert werden, um beispielsweise ihre Hydrolysestabilität zu erhöhen.

In den erfindungsgemäßen, in Wasser dispergierbaren Gemischen liegen 50 bis 96, vorzugsweise 70 bis 93 Gew.-Teile der genannten hydrophoben Kunstharze (Komponente A) in Abmischung mit 4 bis 50, vorzugsweise 6 bis 30 Gew.-Teilen der genannten, als Emulgatoren wirkenden, hydrophilen Polyurethane (Komponente B) vor. Es ist jedoch wichtig, Art und Mengenverhältnisse der Einzelkomponenten im Rahmen der genannten Grenzen so zu wählen, daß der Massengehalt der von der Komponente d) herrührenden Oxyäthyleneinheiten ca. 2 bis 20, vorzugsweise 5 bis 17 %, des in Wasser dispergierten Gemischs beträgt.

Zusätzlich können auch weitere, Hydrophilie verleihende Komponenten, sogenannte Coemulgatoren, eingesetzt werden.

Die Gemische können durch einfaches Abmischen der Einzelkomponenten hergestellt werden, gegebenenfalls in Gegenwart der oben genannten inerten Lösungsmittel.

Zur Herstellung der erfindungsgemäßen wäßrigen Beschichtungsmittel werden die erfindungsgemäßen Gemische in Wasser dispergiert, was sowohl durch einfaches Einrühren von Wasser in die vorgelegte Mischung der Kunstharze mittels üblicher Dissolver, wie auch durch Eingießen der Mischung in Wasser unter Rühren erfolgen kann. Auf diese Weise können stabile Öl-in-Wasser-Emulsionen erhalten werden.

Diese wäßrigen Dispersionen sind wertvolle wäßrige Bindemittel für Überzugsmittel. Sie können allein oder in Kombination mit den aus der Lacktechnologie bekannten Hilfs- und Zusatzmitteln wie z.B. Füllstoffen, Pigmenten, Lösungsmitteln, Verlaufshilfsmitteln zur Herstellung von Beschichtungen auf beliebigen Substraten verwendet werden.

Geeignete Substrate sind Papier, Kartonage, Leder, Holz, Kunststoffe, Vlies, Folien, Textilien, keramische Materialien, mineralische Materialien, Glas, Metall, beschichtetes Metall, Kunstleder, photographische Materialien wie z.B. mit photographischer Schicht versehenes Papier.

Der Auftrag dieser Beschichtungsmittel kann auf bekannte Weise durch Spritzen, Rakeln, Walzen, Streichen, Tauchen oder Gießen erfolgen. Nach Verdunsten des Wassers sowie der gegebenenfalls mitverwendeten inerten Lösungsmittel kann die Vernetzung der Überzüge entweder mit Hilfe energiereicher Strahlung, wie UV-Licht, Elektronen- oder Gammastrahlen oder durch Härtung mit Metallsalzen von organischen Säuren, (Hydro)-Peroxiden oder anderen Sikkativen bei Temperaturen zwischen Raumtemperatur und 250 °C erfolgen.

Im Falle der Vernetzung mittels UV-Bestrahlung ist es notwendig, den Überzugsmassen Photoinitiatoren hinzuzufügen. Als Photoinitiatoren sind die üblicherweise eingesetzten Verbindungen geeignet, wie sie z.B. in Houben-Weyl, Methoden der organischen Chemie, Band E 20, Seite 80 ff, Georg Thieme Verlag, Stuttgart 1987, beschrieben sind. Gut geeignet sind z.B. Benzoinäther wie Benzoinisopropyläther, Benzilketale, wie z.B. Benzildimethylketal und Hydroxyalkylphenone, wie z.B. 2-Hydroxy-2-methyl-1-phenyl-propan-1-on.

Die erwähnten Photoinitiatoren werden je nach Verwendungszweck der erfindungsgemäßen Massen in Massenanteilen zwischen 0,1 und 10 %, vorzugsweise 0,1 bis 5 %, bezogen auf die Masse der dispergiert vorliegenden hydrophilen und hydrophoben Kunstharze, eingesetzt. Sie können als einzelne Substanz oder, wegen häufiger vorteilhafter synergistischer Effekte, auch in Kombination miteinander verwendet werden.

Die bei der oxidativen Vernetzung eingesetzten Metallsalze sind z.B. Kobalt-, Blei- und Mangansalze von Sikkativsäuren wie Leinölfettsäuren, Tallölfettsäuren, Sojaölfettsäuren, von Harzsäuren, wie Abietinsäure und Naphthensäure oder von Essigsäure und Isooctansäure. Sie werden in solchen Mengen eingesetzt, daß der Massengehalt an Metallionen, bezogen auf die Masse der dispergiert vorliegenden hydrophilen und hydrophoben Kunstharze, 0,005 bis 1 % ist. Als (Hydro)-Peroxide seien beispielhaft genannt: Wasserstoffperoxid, Di-tert.-butylperoxid, Benzoylperoxid, Cyclohexanonperoxid, Methyläthylketonperoxid, Acetylacetonperoxid, Dinonylperoxid, Bis-(tert.-butylcyclohexyl)-peroxydicarbonat, tert.-Butylhydroperoxid, Cumolhydroperoxid, 2,5-Dimethylhexan-2,5-hydroperoxidund Diisopropyl-benzol-monohydroperoxid. Vorzugsweise werden diese (Hydro)-Peroxide in Mengen von 1 bis 10 % eingesetzt, bezogen auf die Masse der dispergiert vorliegenden hydrophilen und hydrophoben Kunstharze. Die erfindungsgemäßen Polyurethane sind auch wirksame Emulgatoren für Öle, die auf Oligomeren und niedrigen Polymeren des Butadiens basieren.

In den nachfolgenden Beispielen sind alle Prozentangaben als Massengehalte zu verstehen.

### Beispiele

### Herstellung der Emulgatoren:

### Beispiel E1:

25,65 g Tetramethylxylylendiisocyanat (0,105 mol) werden in einem Dreihalskolben vorgelegt und unter Stickstoff auf ca. 100 °C erwärmt. Zu dem Diisocyanat wird dann unter Rühren eine Mischung von 140 g Polybutadiendiol (durchschnittliche Molmasse 2800 g/mol) und 28 g ®Solvesso 100 langsam zugetropft (ca. 30 min). Es wird solange weiter bei 100 °C gerührt, bis der NCO-Gehalt auf 2,2 % gefallen ist.

Die Reaktionsmischung wird dann unter Rühren zu 600 g auf 100 °C erwärmtes Polyäthylenglykol 6000 (mittlere Molmasse 6000 g/mol) langsam (ca. 30 min) zugegeben. Es wird solange bei 100 °C weitergerührt, bis kein freies Isocyanat mehr nachweisbar ist. Nach dem Abkühlen erhält man einen leicht gelblichen wachsartigen Emulgator.

### Beispiel E2

25,65 g Tetramethylxylylendiisocyanat (0,105 mol) werden in einem Dreihalskolben vorgelegt und unter Stickstoff auf ca. 100 °C erwärmt. Zu dem Diisocyanat wird dann unter Rühren eine Mischung von 140 g Polybutadiendiol (durchschnittliche Molmasse 2800 g/mol) und 28 g ®Solvesso 100 langsam zugetropft (ca. 30 min). Es wird solange weiter bei 100 °C gerührt, bis der NCO-Wert auf 2,2 % gefallen ist. Zu der Reaktionsmischung wird dann unter Rühren 500g erwärmter Polyäthylenglykolmonomethyläther 5000 (mittlere Molmasse 5000 g/mol) langsam (ca. 30 min) zugegeben. Es wird solange bei 100 °C weitergerührt, bis kein freies Isocyanat mehr nachweisbar ist. Nach dem Abkühlen erhält man einen leicht gelblichen wachsartigen Emulgator.

### Beispiel E3

25,65 g Tetramethylxylylendiisocyanat (0,105 mol) werden in einem Dreihalskolben vorgelegt und unter Stickstoff auf ca. 100 °C erwärmt. Zu dem Diisocyanat wird dann unter Rühren eine auf ca. 60 °C erwärmte Mischung von 500 g Polyäthylenglykol 10000 (durchschnittliche Molmasse 10000 g/mol) und 100 g ®Solvesso 100 langsam zugetropft (ca. 30 min). Es wird solange weiter bei 100 °C gerührt, bis der NCO-Gehalt auf 0,67 % gefallen ist. Die Reaktionsmischung wird dann unter Rühren zu 122 g auf 100 °C erwärmtes Polybutadiendiol (mittlere Molmasse 1220 g/mol) langsam (ca. 30 min) zugegeben. Es wird solange bei 100 °C weitergerührt, bis kein freies Isocyanat mehr nachweisbar ist. Nach dem Abkühlen erhält man einen leicht gelblichen wachsartigen Emulgator.

### Beispiel E4

400 g Polyäthylenglykol 2000 (mittlere Molmasse 2000 g/mol) und 26,8 g Dimethylolpropionsäure (0,2 mol) werden in einem Dreihalskolben vorgelegt und unter Stickstoff auf ca. 100 °C erwärmt. Zu dem Gemisch wird dann unter Rühren 128,25 g Tetramethylxylylendiisocyanat (0,525 mol) langsam zugetropft (ca. 30 min). Es wird solange weiter bei 100 °C gerührt, bis der NCO-Gehalt auf 1,5 % gefallen ist. Die Reaktionsmischung wird dann unter Rühren zu 244 g auf 100 °C erwärmtes Polybutadiendiol 1220 (mittlere Molmasse 1220 g/mol) langsam (ca. 30 min) zugegeben. Es wird solange bei 100 °C weitergerührt, bis kein freies Isocyanat mehr nachweisbar ist. Nach dem Abkühlen erhält man einen leicht gelblichen wachsartigen Emulgator.

### Beispiel E 5

900 g Polyäthylenglykol 6000 (mittlere Molmasse 6000 g/mol) und 183g Polybutadiendiol (mittlere Molmasse 1220 g/mol) werden in einem Dreihalskolben vorgelegt und unter Stickstoff auf ca. 100 °C erwärmt. Zu dem Gemisch wird dann unter Rühren 51,4 g Tetramethylxylylendiisocyanat (0,21 mol) und 200 g ®Solvesso 100 langsam zugetropft (ca. 30 min). Es wird solange weiter bei 100 °C gerührt, bis kein freies Isocyanat mehr nachweisbar ist. Nach dem Abkühlen erhält man einen leicht gelblichen wachsartigen Emulgator.

### Herstellung einer Dispersion:

### Beispiel D1 bis D6:

Zu 200 g eines handelsüblichen Alkydharzes (®Alftalat 650 100%) werden jeweils 37g eines der Emulgatoren, die oben beschrieben sind, zugegeben und bei 70 °C ca. 30 min gerührt bis die Mischung homogen ist. Nach Zugabe von 1 ml Ammoniakwasser (25 %) wird 345 g auf 70 °C erwärmtes E-Wasser sehr langsam unter heftigem Rühren zugetropft (ca. 3 Stunden). Man erhält milchige strukturviskose Dispersionen, die während mindestens 9 Monaten lagerstabil sind.

## Patentansprüche

1. Polyurethane mit olefinischen Doppelbindungen und einem Massengehalt an über Polyäthylenglykol eingebauten Äthylenoxideinheiten von 20 bis 80 %, erhältlich durch Umsetzung von
a) mindestens einem organischen Polyisocyanat, mit
b) mindestens einem gegenüber Isocyanaten reaktiven Polybutadienderivat
c) und gegebenenfalls einem oder mehreren Diolen, die zusätzlich mindestens eine weitere Hydroxylgruppe oder Carboxylgruppe enthalten, und
d) einer Polyoxyalkylenglykol-Komponente mit einer Molmasse von 500 bis 10000 g/mol
unter Einhaltung eines NCO/OH-Äquivalentverhältnisses, bezogen auf alle Ausgangskomponenten a) bis d), von 0,5:1 bis 1,2:1.

2. Polyurethane nach Anspruch 1, dadurch gekennzeichnet, daß als Komponente a) ein organisches Diisocyanat oder eine Mischung von organischen Diisocyanaten eingesetzt wird, ausgewählt aus der Gruppe der aliphatischen, aromatischen und cycloaliphatischen Diisocyanate.

3. Polyurethane nach Anspruch 1, dadurch gekennzeichnet, daß als Komponen-te b) ein Polybutadienderivat mit Endgruppen ausgewählt aus Hydroxyl-, Carboxyl-, Amino- und Thiol-Gruppen eingesetzt wird.

4. Polyurethane nach Anspruch 1, dadurch gekennzeichnet, daß als Komponen-te c) Bishydroxyalkancarbonsäuren eingesetzt werden.

5. Polyurethane nach Anspruch 1, dadurch gekennzeichnet, daß als Komponen-te d) Polyäthylenglykol oder ein Poly(oxyäthylen)(oxypropylen)glykol mit einem Massengehalt von über 50 % an Oxyäthyleneinheiten eingesetzt wird.

6. Polyurethane gemäß Anspruch 1, dadurch gekennzeichnet, daß die Komponente b) Polybutadiendiol ist.

7. Verwendung der Polyurethane gemäß Anspruch 1 als reaktive Emulgatoren für allein in Wasser nicht dispergierbare, radikalisch und/oder oxidativ härtbare Kunstharze bei der Herstellung von wäßrigen Kunstharzdispersionen.

8. Verwendung der Polyurethane gemäß Anspruch 1 als Emulgatoren für Polybutadien-basierende Öle.

9. In Wasser dispergierbares Gemisch von radikalisch härtbaren, ungesättigten Gruppen enthaltenden Kunstharzen, bestehend im wesentlichen aus
A) 50 bis 95 Gew.-Teilen mindestens eines, in Wasser nicht dispergierbaren, ungesättigte Gruppen enthaltenden Kunstharzes der zahlenmittleren Molmasse Mn 500 bis 10.000 g/mol und
B) 5 bis 50 Gew.-Teilen mindestens eines Polyurethans gemäß Anspruch 1.

10. In Wasser dispergierbares Gemisch von radikalisch härtbaren Kunstharzen nach Anspruch 9, dadurch gekennzeichnet, daß der Massengehalt an Oxyäthyleneinheiten in dieser Mischung bis zu 20 % beträgt.

11. Wäßriges Beschichtungsmittel, enthaltend ein radikalisch und/oder oxidativ härtbares Bindemittel sowie gegebenenfalls in der Lacktechnologie übliche Hilfs- und Zusatzmittel, dadurch gekennzeichnet, daß das Bindemittel im wesentlichen aus einem Gemisch gemäß Anspruch 9 besteht.
